# EUROPÄISCHE PATENTSCHRIFT

(11) **EP 4 082 743 B1**
(45) Veröffentlichungstag und Bekanntmachung des Hinweises auf die Patenterteilung: **23.04.2025**
(21) Anmeldenummer: 22161248.4
(22) Anmeldetag: 10.03.2022
(51) Int. Cl.: B29C 44/14, B29C 44/60, B29C 44/08, B29C 44/32, B29C 44/30

(54) **VERFAHREN UND VORRICHTUNG ZUM HINTERSCHÄUMEN EINES OBERMATERIALS**
METHOD AND DEVICE FOR FOAMING IN-SITU OF A TOP MATERIAL
PROCÉDÉ ET DISPOSITIF DE MOUSSAGE IN SITU D'UNE MATIÈRE SUPÉRIEURE

(30) Priorität: 30.04.2021 DE 102021204351
(43) Veröffentlichungstag der Anmeldung: 02.11.2022
(73) Patentinhaber: Hofer Textilveredelungs GmbH, 95032 Hof/Saale (DE)
(72) Erfinder: Gebhardt, Alexander, 95100 Selb (DE); Neumeyer, Thomas, 95448 Bayreuth (DE); Ocker, Michael, 95367 Trebgast (DE); Rothe, Sascha, 95111 Rehau (DE); Saritekin, Mert, 95032 Hof (DE)
(74) Vertreter: Rau, Schneck & Hübner Patentanwälte Rechtsanwälte PartGmbB

(56) Entgegenhaltungen:
- EP-A1- 3 085 606
- DE-A1- 1 923 531
- US-A1- 2006 079 589

## Beschreibung

Die Erfindung betrifft ein Verfahren zum Hinterschäumen eines Obermaterials.

Hinterschäumte Obermaterialien werden wie flammkaschierte oder klebekaschierte Obermaterialien beispielsweise als Dekormaterial und/oder Funktionsmaterial, insbesondere als Interieur im Sichtbereich eines Kraftfahrzeugs eingesetzt. Bei der Herstellung eines derartigen Materials werden zunächst das Schaummaterial und das Obermaterial separat hergestellt und in einem nachfolgenden Fügeschritt miteinander verbunden. Ein derartiges Verfahren ist bekannt aus EP 3 085 606 A1.

US 2006/0079589 A1 offenbart den Oberbegriff des Anspruchs 1; es zeigt eine Polyurethanschaumlage und ein Verfahren für einen Mehrlagenverbund mit der Polyurethanschaumlage.

DE 19 23 531 A offenbart ein Verfahren und eine Vorrichtung zum Egalisieren eines auf eine laufende Unterlage kontinuierlich aufgetragenen, Schaumstoff bildenden Reaktionsgemisches.

Der Erfindung liegt die Aufgabe zugrunde, die Herstellung eines derartigen Verbundmaterials zu vereinfachen und insbesondere die Herstellung wirtschaftlich zu gestalten.

Die Aufgabe wird durch die Merkmale des Anspruchs 1 gelöst. Der Kern der Erfindung besteht in der Erkenntnis, dass das Aufschäumen eines flüssigen Schaummaterials und das Verbinden des Schaummaterials mit einem Obermaterial zu einem Verbundmaterial in einem, insbesondere einstufigen, Herstellverfahren kombiniert werden kann. Erfindungsgemäß ist also ein direktes Hinterschäumen des Obermaterials in einem einstufigen in-situ-Prozess möglich. Ein mehrstufiger Prozess mit separaten Herstellverfahren und einem nachfolgenden Fügeschritt von Halbzeugen ist entbehrlich. Die erfindungsgemäße Herstellung reduziert Verfahrensschritte und ist kostensparend. Das erfindungsgemäße Herstellverfahren ist wirtschaftlich.

Wesentlich ist, dass zunächst ein teilweises Aufschäumen des Schaummaterials erfolgt, bevor die Schaumlage mit dem Obermaterial verbunden wird. Es wurde erkannt, dass dadurch einem Durchschäumen des Obermaterials entgegengewirkt wird. Das Obermaterial weist eine vergleichsweise offene Oberfläche auf, sodass eine mechanische und/oder chemische Verbindung mit dem Schaummaterial begünstigt ist. Das Obermaterial ist insbesondere ein Gewebe aus Kettfäden und Schussfäden. Insbesondere beträgt die Kettfadendichte weniger als 50 Fäden pro cm, insbesondere weniger als 40 Fäden pro cm und insbesondere höchstens 35 Fäden pro cm. Insbesondere beträgt die Kettfadendichte mindestens 10 Fäden pro cm, insbesondere mindestens 20 Fäden pro cm und insbesondere mindestens 25 Fäden pro cm. Die Schussfadendichte beträgt insbesondere höchstens 25 Fäden pro cm, insbesondere höchstens 20 Fäden pro cm und insbesondere höchstens 17 Fäden pro cm. Die Schussfadendichte beträgt insbesondere mindestens fünf Fäden pro cm, insbesondere mindestens sieben Fäden pro cm und insbesondere mindestens acht Fäden pro cm. Alternativ kann das Obermaterial auch mit einer vergleichsweise geschlossenen Oberfläche, insbesondere als geschlossener Film und insbesondere als Kunstleder ausgeführt sein.

Bei dem erfindungsgemäßen Verfahren wird zunächst ein reaktives Schaummaterial in Form einer Flüssigkeit als Schaumlage mit einer Ausgangshöhe bereitgestellt. Als Schaummaterial dient insbesondere ein Gemisch aus Polyol und Isocyanat, wobei zusätzlich Zuschlagstoffe zugegeben werden können.

Zuschlagstoffe können beispielsweise Additive, insbesondere Katalysatoren, sein, die insbesondere mit einem Anteil von 1 pphp bezogen auf Polyol vorliegen. pphp steht für "parts per hundred parts polyol per weight". Der Anteil an Wasser beträgt insbesondere zwischen 0 und 1,75 pphp, insbesondere 0,75 pphp. Das Mengenverhältnis von Polyol zu Isocyanat liegt insbesondere bei 2,0: 1,0. Das genannte Mengenverhältnis liegt insbesondere in einem Bereich von 1,0 bis 3,0: 1,0, insbesondere von 1,5 bis 2,5: 1,0. Das Schaummaterial wird insbesondere bei Raumtemperatur und insbesondere ohne zusätzliche Wärmezufuhr bereitgestellt. Für den nachfolgenden Schaumprozess kann es vorteilhaft sein, wenn das Schaummaterial, zumindest geringfügig, und insbesondere auf eine Maximaltemperatur von höchstens 50°C, insbesondere höchstens 45°C, insbesondere höchstens 40°C, insbesondere höchstens 35°C und insbesondere höchstens 30°C erwärmt wird.

Die Ausgangshöhe der Schaumlage entspricht einer Auftragsdicke der Flüssigkeit. Die Höhenrichtung beim Aufschäumen des Schaummaterials entspricht der späteren Dickenrichtung der Schaumlage und insbesondere des so hergestellten Verbundmaterials.

Eine der Erfindung zugrundeliegende Erkenntnis besteht darin, dass die mit dem Obermaterial zu verbindende Schaumlage während des erfindungsgemäßen Verfahrens aus dem reaktiven Schaummaterial hergestellt und unmittelbar weiterverarbeitet wird. Es ist also entbehrlich, dass fertiggeschäumtes Material in Form einer Schaumlage als Halbzeug zur Verfügung gestellt werden und mit dem Obermaterial verklebt werden muss. Es wurde erfindungsgemäß gefunden, dass die Herstellung der Schaumlage aus dem Schaummaterial und das Verbinden mit dem Obermaterial in ein und demselben Verfahren kombiniert werden kann. Das erfindungsgemäße Verfahren ist funktionsintegrativ und vermeidet die Lagerung und den Transport von Halbzeugen. Das Verfahren ist effizient.

Es wurde insbesondere gefunden, dass mit dem reaktiven Schaummaterial eine Polyadditionsreaktion gestartet wird, wodurch die eigentliche Schaumlage, insbesondere Polyurethan, in dem erfindungsgemäßen Verfahren erst gebildet wird. Dadurch kann vermieden werden, dass nicht eine fertige Schaumlage bereitgestellt und nachträglich wieder thermisch aktiviert, also aufgeschmolzen werden muss. Das Erfindungsgemäße Verfahren ist unaufwändig. Der Energieeintrag ist reduziert.

Insbesondere liegen die in der Mischung des Schaummaterials vorliegenden Komponenten, insbesondere Polyol und Isocyanat, als Flüssigkeiten vor. Die Handhabung in dem erfindungsgemäßen Verfahren ist dadurch vereinfacht.

Zudem wurde erkannt, dass separate Klebstoffe für die Verbindung des Schaummaterials mit dem Obermaterial entbehrlich sind, weil das Schaummaterial selbst, das erst im Verfahren hergestellt wird, eine ausreichende Klebrigkeit aufweist. Ein Grund hierfür ist, dass ein nur teilweises Aufschäumen erfolgt. Die Klebrigkeit des nicht vollständig ausreagierten Schaummaterials ist ausreichend.

Wesentlich ist, dass das Schaummaterial am Ende des erfindungsgemäßen Verfahrens vollständig zu einer Schaumlage ausreagiert hat und insbesondere mechanisch belastbar, also geschäumt ist.

Als Schaummaterial dient insbesondere ungeschäumtes Polyurethan-Schaummaterial, das insbesondere flüssig ist.

Die Schaumlage ist insbesondere ein flächiges Gebilde mit einer Länge und einer Breite, die jeweils größer, insbesondere deutlich größer, sind als die Ausgangshöhe. Insbesondere sind Länge und/oder Breite mindestens zehnmal so groß, insbesondere mindestens fünfzigmal so groß, insbesondere mindestens hundertmal so groß wie die Ausgangshöhe.

Das Schaummaterial wird aufgeschäumt. Das Aufschäumen erfolgt zumindest teilweise insbesondere zu mindestens 50 %, insbesondere zu mindestens 70 %, insbesondere zu mindestens 80 %, insbesondere zu mindestens 90 % und insbesondere vollständig. Das Aufschäumen erfolgt, insbesondere zunächst, unvollständig, aber gleichmäßig. Unvollständig bedeutet, dass nur ein Anteil des reaktiven Schaummaterials reagiert hat. Unvollständig aufgeschäumtes Schaummaterial weist also noch einen Anteil an reaktivem, insbesondere flüssigem, Schaummaterial auf. Gleichmäßig bedeutet, dass die Schaumlage über ihre gesamte Fläche bis zu einer ersten Höhe aufgeschäumt wird, wobei die erste Höhe größer ist als die Ausgangshöhe. Insbesondere wird die Höhe des Schaummaterials, also die Dicke der Schaumlage, durch das Aufschäumen konstant erhöht. Insbesondere ist die Höhe der Schaumlage homogen über die gesamte Fläche der Schaumlage verteilt.

Dadurch, dass das Schaummaterial nur teilweise aufgeschäumt ist, ist eine obere Kontaktfläche des Schaummaterials klebrig, weist also adhäsive Materialeigenschaften auf. Der Schaum selbst ist in dem teilweise aufgeschäumten Zustand mechanisch und/oder chemisch instabil und insbesondere mechanisch nicht belastbar. Vorteilhaft ist es, wenn das unvollständige Aufschäumen beendet ist, wenn die Schaumlage, insbesondere eine erste Höhenbegrenzung erreicht. Insbesondere in einem kontinuierlichen Verfahren ist eine Steuerung vorteilhaft, bei der die Schaumlage die erste Höhenbegrenzung erreicht, nachdem das unvollständige Aufschäumen beendet ist.

Mittels einer optionalen ersten Höhenbegrenzung wird sichergestellt, dass beim teileweisen Aufschäumen der Schaumlage die erste Höhe nicht überschritten wird. Die Höhenausdehnung der Schaumlage wird beim Aufschäumen durch die erste Höhenbegrenzung begrenzt. Die Kontaktfläche der Schaumlage, die insbesondere der ersten Höhenbegrenzung zugewandt ist, wird optional mit einem Reaktionshilfsmittel benetzt. Das Reaktionshilfsmittel ist insbesondere ein Benetzungsmittel. Als Benetzungsmittel dient insbesondere Wasser. Es sind auch andere Benetzungsmittel möglich, die insbesondere das Aufschäumen von Polyurethan-Schaummaterial, beschleunigen.

Besonders vorteilhaft ist, dass das Reaktionshilfsmittel auf die Schaumlage aufgebracht wird, bevor das Obermaterial an der Schaumlage angeordnet wird. Dadurch kann der Schaumprozess früher und insbesondere besser initiiert werden. Das Verbinden der Schaumlage mit dem Obermaterial ist dadurch begünstigt. Insbesondere wird das Reaktionshilfsmittel direkt als Bestandteil der flüssigen Schaumlage zugegeben.

Die erste Höhenbegrenzung ist insbesondere dann entbehrlich, wenn das Obermaterial eine ausreichende Dichte aufweist. Es wurde gefunden, dass das Obermaterial eine ausreichende Dichte aufweist, um unmittelbar an einer Kontaktfläche der Schaumlage verklebt zu werden. Insbesondere ist bei einem ausreichend dichten Obermaterial die Verwendung des oberen Kontaktmaterials entbehrlich. Als ausreichend dicht wird ein Obermaterial dann verstanden, wenn es als Gewebe aus Kettfäden und Schussfäden eine Dichte von mindestens 15 Schussfäden pro cm und mindestens 23 Kettfäden pro cm aufweist. Ein derart dichtes Obermaterial dient im Wesentlichen als folienartiges Trägermaterial.

Überraschend wurde gefunden, dass die Dichte des Obermaterials ausreicht, um ein Durchtränken durch das Schaummaterial zu verhindern. Erfindungsgemäß reagiert also das Schaummaterial lediglich soweit, dass es eine dickflüssige Konsistenz aufweist, insbesondere derart dickflüssig ist, dass ein Durchtränken des Obermaterials nicht erfolgt, also verhindert ist. Ein Kontakt des Schaummaterials mit dem Obermaterial erfolgt insbesondere, wenn das Gemisch einen sogenannten Gelpunkt erreicht, oder kurz davor. Als Gelpunkt wird der Zeitpunkt definiert, an dem das Gemisch sich nicht mehr verformt oder fließt. Der Gelpunkt des Schaummaterials liegt insbesondere in einem Bereich von 1,0 min bis 5 min. Insbesondere kann der Gelpunkt für das Schaummaterial in Abhängigkeit der Zusammensetzung und insbesondere in Abhängigkeit des Mengenverhältnisses von Polyol zu Isocyanat variieren.

Alternativ ist es möglich, das Schaummaterial für einen definierten Reaktionszeitraum schäumen zu lassen und dabei unter dem oberen Kontaktmaterial anzuordnen bis das Schaummaterial nahezu fest ist.

In diesem Fall kann die Höhe über den Materialauftrag, also die Zugabe des Schaummaterials, das Abzugselement in Form eines Rakels, und die insbesondere zweite Höhenbegrenzung definiert werden.

Insbesondere wird das Benetzungsmittel unmittelbar an der Kontaktfläche der Schaumlage mittels der ersten Höhenbegrenzung, insbesondere durch den Kontakt der Schaumlage mit einer an der ersten Höhenbegrenzung angeordneten Kontaktfolie appliziert. Insbesondere erfolgt die Benetzung der Schaumlage mittels der Kontaktfolie unkompliziert. Das Benetzungsmittel stellt ein Prozesshilfsmittel dar. Die Kontaktfläche der Schaumlage wird mit dem Benetzungsmittel imprägniert. Insbesondere kann der Grad der Imprägnierung gezielt eingestellt werden. Durch das Applizieren des Benetzungsmittels können die beim Aufschäumen des Schaummaterials stattfindenden Reaktionen gezielt beeinflusst und insbesondere beschleunigt werden. Es wurde gefunden, dass das reaktive Schaummaterial, das insbesondere eine Mischung aus Polyol und Isocyanat mit Wasser aufweist, durch die Zugabe des Reaktionshilfsmittels, insbesondere in Form von Wasser, schneller reagiert.

Das Obermaterial wird an der Kontaktfläche der Schaumlage angeordnet und damit verbunden. Mittels einer zweiten Höhenbegrenzung wird die Höhenausdehnung des Verbundmaterials begrenzt. Mittels der zweiten Höhenbegrenzung wird das Verbundmaterial insbesondere an die Kontaktfläche der Schaumlage angedrückt. Die Schaumlage wird mit dem Obermaterial zu dem Verbundmaterial also insbesondere durch Druckaufbringung mittels der zweiten Höhenbegrenzung gefügt. Insbesondere ist eine zweite Höhe der Schaumlage in dem Verbundmaterial kleiner oder gleich der ersten Höhe. Insbesondere wird durch die zweite Höhenbegrenzung ein Spalt mit einem Spaltmaß definiert, das der zweiten Höhe entspricht.

Dadurch, dass der Materialverbund durch diesen Spalt bewegt wird, findet der Fügeprozess, also das Verbinden des Obermaterials mit der Schaumlage statt. Eine Druckaufbringung mit der zweiten Höhenbegrenzung ist optional und erfolgt insbesondere dadurch, dass das Spaltmaß kleiner ist als die Höhe des Verbundmaterials, bevor es durch den Spalt bewegt wird. Die Höhe des Verbundmaterials wird dadurch reduziert. Das Verbundmaterial wird dadurch in Höhenrichtung verpresst.

Die erste Höhenbegrenzung und/oder die zweite Höhenbegrenzung sind als obere Barriere, insbesondere in Form eines Deckels ausgeführt, dessen Grundfläche insbesondere größer oder gleich der Fläche der Schaumlage ist.

Das Begrenzen der Höhenausdehnung der Schaumlage beim teilweisen Aufschäumen erfolgt insbesondere mittels der ersten Höhenbegrenzung bis zu der ersten Höhe. Die erste Höhe ist größer oder gleich der Ausgangshöhe.

Beim Benetzen und Imprägnieren der Kontaktfläche der Schaumlage mit dem Reaktionshilfsmittel ist die Kontaktfläche insbesondere der ersten Höhenbegrenzung zugewandt angeordnet.

Eine wesentliche Erkenntnis der Erfindung beruht darauf, dass das Schaummaterial zunächst insbesondere zumindest teilweise aufgeschäumt wird, ohne dass eine Verbindung oder ein Kontakt mit dem Obermaterial besteht. Der Kontakt und/oder die Verbindung mit dem Obermaterial erfolgt erst, nachdem das Schaummaterial bereits teilweise aufgeschäumt worden ist und adhäsive Eigenschaften aufweist. Insbesondere wird dadurch vermieden, dass das Obermaterial durch das Schaummaterial imprägniert wird. Dadurch kann ausgeschlossen werden, dass die optischen und/oder haptischen Eigenschaften des Obermaterials durch das Hinterschäumen negativ beeinträchtigt werden. Das mit dem Schaummaterial hinterschäumte Obermaterial weist im Wesentlichen die gleichen optischen und/oder haptischen Eigenschaften auf wie ein Verbundmaterial, das durch Flammkaschieren oder Klebekaschieren hergestellt worden ist. Insbesondere ist ein unerwünschtes Aushärten des Obermaterials in Folge einer unerwünschten Imprägnierung vermieden.

Es wurde insbesondere gefunden, dass es vorteilhaft ist, wenn das Schaummaterial eine ausreichende Festigkeit aufweist, um als Flächenmaterial mechanisch abgezogen zu werden. Durch die ausreichende Festigkeit wird gewährleistet, dass das Schaummaterial beim mechanischen Abziehen seine Dimension, insbesondere die Lagendicke des Schaummaterials, im Wesentlichen beibehält. Das bedeutet insbesondere, dass die Lagendicke des Schaummaterials beim mechanischen Abziehen nicht oder nur unwesentlich reduziert wird. Insbesondere beträgt die Lagendicke des Schaummaterials nach dem mechanischen Abziehen mindestens 90 % der Lagendicke des Schaummaterials vor dem Abziehen, insbesondere mindestens 92 %, insbesondere mindestens 95 %, insbesondere mindestens 98 % und insbesondere ist die Lagendicke nach dem Abziehen identisch mit der Lagendicke vor dem Abziehen.

Zudem ist es vorteilhaft, wenn das Schaummaterial ausreichende adhäsive Eigenschaften aufweist, um die Verbindung mit dem Obermaterial, insbesondere durch Kleben und insbesondere ohne zusätzliches Klebematerial zu ermöglichen. Insbesondere weist das Schaummaterial einen Haftwert von mindestens 6 N/5 cm nach einer Wartedauer von höchstens 24h auf. Insbesondere beträgt der Haftwert nach höchstens 24h mindestens 8 N/5 cm, insbesondere mindestens 9 N/5 cm und insbesondere mindestens 10 N/5 cm.

Trotzdem ist die Verbindung der Schaumlage an dem Obermaterial, also die Haftung der Schaumlage mit dem Obermaterial ausreichend groß und entspricht im Wesentlichen der Haftung, die erzielt werden kann, wenn die Schaumlage mit dem Obermaterial in einem separaten Fügeverfahren, insbesondere durch Flammkaschieren oder Klebekaschieren, hergestellt worden wäre.

Als Obermaterial dienen insbesondere Textilien, insbesondere textile Flächengebilde, insbesondere Gewirke, Gewebe, Gestricke und/oder Gelege aus Fasermaterial. Die Fasern können natürlichen und/oder synthetischen Ursprungs sein. Insbesondere sind die Textilien flammkaschierfähig oder klebekaschierfähig. Insbesondere weist das Obermaterial nach dem Kaschieren einen Haftwert auf, der mindestens 2 N/5 cm, insbesondere mindestens 4 N/5 cm, insbesondere mindestens 6 N/5 cm, insbesondere mindestens 8 N/5 cm, insbesondere mindestens 10 N/5 cm, insbesondere mindestens 15 N/5 cm und insbesondere mindestens 20 N/5 cm auf. Flammkaschierfähige Obermaterialien weisen typischerweise eine Temperaturbeständigkeit von mindestens 60°C auf. Derartige Obermaterialien können für das erfindungsgemäße Verfahren eingesetzt werden. Es sind aber auch Obermaterialien geeignet, die eine geringere Temperaturbeständigkeit oder keine Temperaturbeständigkeit aufweisen.

Als Obermaterial können auch Folien, insbesondere aus Kunststoff, insbesondere umfassend Polyvinylchlorid (PVC), oder Metall dienen.

Als Obermaterial dient insbesondere ein Verbundmaterial von textilem Gewebe, Gestricke, Gewirke und/oder Gelege, das mit einer, insbesondere weichen, PVC- und/oder Polyurethan-Beschichtung überzogen ist. Ein derartiges Verbundmaterial wird als Kunstleder bezeichnet.

Ein Verfahren gemäß Anspruch 2 ermöglicht eine gezielte und insbesondere veränderlich festlegbare Einstellung von Materialeigenschaften des Schaummaterials. In Abhängigkeit der Zusammensetzung des Schaummaterials kann eine Reaktionsdauer veränderlich festgelegt werden. Die Reaktionsdauer bezieht sich auf das Benetzen und Imprägnieren der oberen Kontaktfläche der Schaumlage mit dem Reaktionshilfsmittel. Während der Reaktionsdauer ist die Schaumlage insbesondere an der ersten Höhenbegrenzung angeordnet. Die erste Höhenbegrenzung dient insbesondere als Deckel für die Schaumlage.

Vorteilhaft ist, wenn der Zeitpunkt des Kontakts und/oder eine Andrückdauer derart festgelegt werden, dass das Obermaterial an der Schaumlage angeordnet und damit verbunden wird, bevor die Schaumlage vollständig ausreagiert hat. Das Andrücken des Obermaterials erfolgt insbesondere mittels der zweiten Höhenbegrenzung. Die Andrückdauer ist im Vergleich zur Reaktionsdauer reduziert und beträgt insbesondere höchstens 2 min, insbesondere höchstens 1 min, insbesondere höchstens 30 s.

Ein Verfahren gemäß Anspruch 3 verhindert ein unerwünschtes Anhaften des Schaummaterials an der ersten Höhenbegrenzung. Als Kontaktmaterial dient insbesondere eine Kontaktfolie, insbesondere aus Kunststoffmaterial. Die Kontaktfolie ist insbesondere als sogenannte Prepreg-Folie ausgebildet. Eine Prepreg-Folie ist insbesondere durch Verstärkungsfasern gebildet, die mit einem Harz, insbesondere einem Kunststoffharz, imprägniert sind.

Alternativ kann die Kontaktfolie als Polytetrafluorethylen-(PTFE-)Folie ausgeführt sein.

Ein Verfahren gemäß Anspruch 4 vereinfacht das anschließende Anordnen und Verbinden des Obermaterials mit der Schaumlage.

Ein Verfahren gemäß Anspruch 5 ermöglicht eine definierte und insbesondere flachbauende Herstellung eines Verbundmaterials aus Obermaterial und Schaummaterial. Die Herstellung besonders dünner Verbundmaterialien ist dadurch gewährleistet. Die Herstellung besonders dünner Verbundmaterialien ist unkompliziert möglich.

Ein Verfahren gemäß Anspruch 6 gewährleistet eine ausreichende Haftfestigkeit des Verbundmaterials. Insbesondere beträgt die Haftfestigkeit des Obermaterials an der Schaumlage mindestens 6 N/5 cm, insbesondere mindestens 7 N/5 cm, insbesondere 8 N/5 cm, insbesondere mindestens 9 N/5 cm und insbesondere mindestens 10 N/5 cm.

Insbesondere wird die Schaumlage mit dem Obermaterial verklebt. Insbesondere ist ein separater Klebstoff entbehrlich.

Ein Verfahren gemäß Anspruch 7 ermöglicht eine gezielte Beeinflussung des Aufschäumens und/oder des Verbindens der Schaumlage mit dem Obermaterial. Es ist insbesondere möglich, definierte Temperaturprofile einzustellen, die während des Herstellverfahrens an der ersten und/oder zweiten Höhenbegrenzung bereitgestellt werden. Ein derartiges Temperaturprofil ist insbesondere zeitabhängig, so dass eine bereitgestellte Temperatur während des Herstellverfahrens veränderlich mit einem im Wesentlichen beliebigen Temperaturverlauf über die Zeit festgelegt werden kann.

Typischerweise erfolgt das Temperieren in einem Bereich von mindestens Raumtemperatur und höchstens 50°C und insbesondere von höchstens 60°C und über eine Temperierdauer von etwa 3 min bis höchstens 12 min.

In Abhängigkeit des verwendeten Schaummaterials und des verwendeten Obermaterials können die Temperierparameter, insbesondere Dauer und Temperatur variieren.

Vorteilhaft ist es, wenn die bereitgestellte Temperatur homogen über die Fläche der Schaumlage verteilt ist. Es ist aber grundsätzlich auch denkbar, ein Temperaturprofil bereitzustellen, um bestimmte Bereiche mehr oder weniger zu erwärmen, um ein Eigenschaftsprofil eines derart hergestellten Verbundbauteils zu ermöglichen. Das Temperaturprofil ermöglicht die Herstellung eines Verbundbauteils mit lokalen unterschiedlichen Materialeigenschaften. Das Temperaturprofil kann räumlich, insbesondere über die Fläche der Schaumlage verteilt und/oder entlang der Höhenrichtung der Schaumlage veränderlich eingestellt sein. Es ist aber auch möglich, zusätzlich oder alternativ ein Temperaturprofil zeitlich variabel zu gestalten.

Ein Verfahren gemäß Anspruch 8 ist besonders wirtschaftlich und ermöglicht insbesondere die Herstellung von hinterschäumtem Obermaterial mit hohem Durchsatz. Ein derartiges Verfahren ist effizient.

Ein Verfahren gemäß Anspruch 9 ermöglicht eine unkomplizierte Bereitstellung des Schaummaterials und insbesondere dessen Förderung. Als Trägermaterial dient insbesondere eine Trägerfolie, die insbesondere als sogenannte Prepreg-Folie, insbesondere analog der Kontaktfolie, ausgebildet ist.

Es ist auch möglich, das Trägermaterialanalog dem Kontaktmaterial, insbesondere in einem nachgelagerten Prozessschritt, von dem Schaummaterial zu entfernen und ein Untermaterial mit dem Schaummaterial zu verbinden, insbesondere wenn das herzustellende Verbundmaterial dreilagig ausgeführt ist. Bei der dreilagigen Ausführung umfasst das Verbundmaterial das Obermaterial, die Schaumlage und das Untermaterial. Als Untermaterial kann beispielsweise Rundstrickware, Vlies, ein Gestrick, ein Gewirke, ein Gewebe und/oder eine Folie verwendet werden. Insbesondere kann das Verbinden der Schaumlage mit dem Obermaterial und dem Untermaterial in einem gemeinsamen Prozessschritt erfolgen.

Ein Verfahren gemäß Anspruch 10 gewährleistet eine kontinuierliche Förderung des Schaummaterials entlang einer Materialförderrichtung. Bei einem derartigen Verfahren kann mittels der Fördergeschwindigkeit entlang der Materialförderrichtung die jeweilige Dauer für das Aufschäumen und/oder das Verbinden der Schaumlage mit dem Obermaterial zeitlich beeinflusst werden. Insbesondere ist es möglich, die Fördergeschwindigkeit entlang der Materialförderrichtung und/oder die jeweilige Länge der ersten Höhenbegrenzung und der zweiten Höhenbegrenzung derart einzustellen, dass ein kontinuierlicher Materialfluss unter Einhaltung der erforderlichen Reaktionsdauer ermöglicht ist. Ein derartiges Verfahren ist besonders effizient und sehr gut automatisierbar. Menschliche Interaktionen sind im Wesentlichen entbehrlich.

Eine Vorrichtung zum Hinterschäumen eines Obermaterials weist im Wesentlichen die Vorteile des Herstellverfahrens auf, worauf hiermit verwiesen wird. Die Vorrichtung umfasst eine Unterlage, auf der das ungeschäumte Schaummaterial bereitgestellt werden kann. Die Vorrichtung umfasst insbesondere eine erste Höhenbegrenzung. Die erste Höhenbegrenzung dient insbesondere zum Begrenzen einer Höhenausdehnung der Schaumlage bei einem teilweisen oder vollständigen Aufschäumen bis zu einer ersten Höhe, die größer oder gleich der Ausgangshöhe ist. Eine zweite Höhenbegrenzung dient dazu, die Höhenausdehnung der Schaumlage beim teilweisen oder vollständigen Aufschäumen und beim Verbinden der Schaumlage mit dem Obermaterial zu begrenzen. Es ist grundsätzlich denkbar, dass ein und dieselbe Höhenbegrenzung für beide Verfahrensschritte, also zeitlich gesehen nacheinander, verwendet wird. Als vorteilhaft hat es sich aber erwiesen, separate Höhenbegrenzungen für die verschiedenen Prozessschritte einzusetzen. Vorteilhaft ist es, wenn das Obermaterial an der zweiten Höhenbegrenzung fixiert ist, bevor es mit dem Schaummaterial verbunden wird. Dadurch ist das Zuführen und Anordnen des Obermaterials an der Schaumlage vereinfacht.

Vorteilhaft ist ein Abzugselement, das insbesondere in Materialförderrichtung zwischen einer Schaummaterialzuführeinrichtung, also insbesondere dem Polyurethan-Schaumauftrag, und der, insbesondere ersten, Höhenbegrenzung und/oder der zweiten Höhenbegrenzung angeordnet ist. Das Abzugselement ist insbesondere als Rakeleinheit ausgeführt. Das Abzugselement gewährleistet eine vordefinierte Höhe des Schaummaterials, also die Ausgangshöhe. Dadurch ist sichergestellt, dass das Schaummaterial mit der, insbesondere veränderlich festlegbaren, Ausgangshöhe, insbesondere der ersten Höhenbegrenzung, und der zweiten Höhenbegrenzung zugeführt und mit dem Obermaterial verbunden werden kann. Die Begrenzung der Höhe des Schaummaterials auf die erste Höhe und/oder die zweite Höhe ist dadurch vereinfacht.

Eine Vorrichtung, die eine Fördervorrichtung aufweist, die zum, insbesondere kontinuierlichen, Fördern des Schaummaterials, insbesondere mittels eines Trägermaterials, entlang einer Materialförderrichtung dient, insbesondere relativ zu einer ersten Höhenbegrenzung und/oder relativ zu der zweiten Höhenbegrenzung, ermöglicht einen kontinuierlichen Herstellprozess. Insbesondere ermöglicht eine Fördervorrichtung ein, insbesondere kontinuierliches, Fördern des Schaummaterials entlang einer Materialförderrichtung.

Eine Vorrichtung, die eine erste Temperiereinheit zum Temperieren einer ersten Höhenbegrenzung während des Aufschäumens und/oder eine zweite Temperiereinheit zum Temperieren der zweiten Höhenbegrenzung während des Verbindens mit dem Obermaterial aufweist, gewährleistet ein gezieltes Einstellen von Temperaturprofilen während der Herstellung. Dazu können entsprechende Temperiereinheiten vorgesehen sein, die insbesondere an den Höhenbegrenzungen angeordnet und insbesondere darin integriert ausgeführt sein können. Die Temperiereinheiten können als integrierte Heizungen beispielsweise als elektrische Heizungen und/oder als Wärmetauscher ausgeführt sein. Die Temperiereinheiten dienen insbesondere dazu, um Wärme für die Schaumreaktion bereitzustellen und das Aufschäumen zu begünstigen.

Alternativ ist es möglich, die Vorrichtung ohne Temperiereinheiten auszuführen und insbesondere das Schaummaterial untemperiert, also ohne zusätzliche Erwärmung, aufzuschäumen und/oder mit dem Obermaterial zu verbinden. Das Schaummaterial wird im Wesentlichen kalt mit dem Obermaterial verbunden. Insbesondere beträgt eine Maximaltemperatur des Schaummaterials höchstens 50°C.

Eine Vorrichtung, die eine Trenneinheit zum Trennen des Kontaktmaterials von der Schaumlage aufweist, wobei die Trenneinheit entlang der Materialförderrichtung insbesondere stromaufwärts der zweiten Höhenbegrenzung angeordnet ist, gewährleistet ein Bereitstellen der Schaumlage nach dem teilweisen Aufschäumen, bevor die Schaumlage mit dem Obermaterial verbunden wird.

Ein Verfahren, die eine Obermaterialzuführeinrichtung zum Zuführen des Obermaterials aufweist, wobei die Obermaterialzuführeinrichtung insbesondere mit der zweiten Höhenbegrenzung gekoppelt ist, gewährleistet die unmittelbare und unkomplizierte Zuführung des Obermaterials zu der zweiten Höhenbegrenzung, insbesondere für das Verbinden mit der Schaumlage.

Sowohl die in den Patentansprüchen angegebenen Merkmale als auch die in den nachfolgenden Ausführungsformen einer Vorrichtung angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Zusätzliche Merkmale, vorteilhafte Ausgestaltungen und Einzelheiten der Erfindung ergeben sich aus der nachfolgenden Beschreibung von Ausführungsbeispielen anhand der Zeichnungen. Es zeigen:
- Fig. 1: eine schematische Darstellung einer Vorrichtung gemäß einer ersten Ausführungsform, und
- Fig. 2: eine schematische Darstellung einer Vorrichtung gemäß einer zweiten Ausführungsform für eine kontinuierliche Durchführung des Verfahrens.

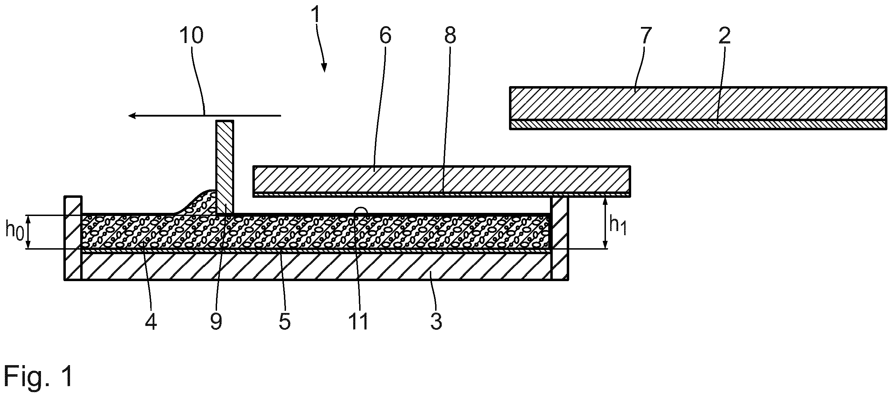

Eine in Fig. 1 insgesamt mit 1 gekennzeichnete Vorrichtung dient zum Hinterschäumen eines Obermaterials 2. Die Vorrichtung 1 umfasst eine Unterlage 3, die gemäß dem gezeigten Ausführungsbeispiel als rahmenartige Form ausgeführt ist, mit einer Bodenwand und sich von der Bodenwand vertikal nach oben erstreckenden Seitenwänden. Die Grundfläche der Unterlage 3 gibt die Fläche des Schaummaterials vor. An einer dem Schaummaterial 4 zugewandten Oberseite ist an der Unterlage 3 ein Trägermaterial 5 in Form einer Trägerfolie angeordnet.

An einer der Unterlage 3 gegenüberliegenden Oberseite der Form kann eine erste Höhenbegrenzung 6 oder eine zweite Höhenbegrenzung 7 angeordnet werden. Die Höhenbegrenzungen 6, 7 sind derart ausgeführt, dass sie relativ zu der Unterlage 3 verlagert werden können. Die Höhenbegrenzungen 6, 7 sind im Wesentlichen identisch ausgeführt. Die Höhenbegrenzungen weisen jeweils eine Grundfläche auf, die im Wesentlichen der Grundfläche der Unterlage 3 entspricht. Die Höhenbegrenzungen 6, 7 bilden im Wesentlichen einen Deckel für die Unterlage 3, wobei der Deckel derart ausgeführt sein kann, dass er an den Seitenwänden aufliegt oder in den von den Seitenwänden begrenzten Innenraum der Form eindringen kann.

An einer der Unterlage 3 zugewandten Unterseite ist an der ersten Höhenbegrenzung 6 ein Kontaktmaterial 8, insbesondere eine Kontaktfolie, angebracht.

An der zweiten Höhenbegrenzung 7 ist an der der Unterlage 3 zugewandten Unterseite das Obermaterial 2 angebracht.

Die Vorrichtung 1 kann ein Abzugselement 9 aufweisen, um die Ausgangshöhe h₀ des Schaummaterials 4 vor dem Aufschäumen definiert festzulegen. Das Abzugselement 9 ist insbesondere in Höhenrichtung verstellbar angeordnet. Die Ausgangshöhe h₀ kann mittels des Abzugselements veränderlich festgelegt werden. Das Abzugselement 9 ist insbesondere entlang einer Abzugsrichtung 10 verlagerbar, die insbesondere quer und insbesondere senkrecht zur Höhenrichtung des Schaummaterials 4 orientiert ist.

Die Schaumlage weist eine obere, der jeweiligen Höhenbegrenzung 6, 7 zugewandte Kontaktfläche 11 auf.

Nachfolgend wird anhand von Fig. 1 ein Verfahren zum Hinterschäumen des Obermaterials 2 anhand der Vorrichtung 1 näher erläutert. Ungeschäumtes Schaummaterial, also ungeschäumte Polyurethanmasse wird in einem flüssigen Zustand auf die Unterlage 3 gegeben. Die Ausgangshöhe h₀ des Schaummaterials 4 wird mittels des Abzugselements 9 festgelegt. Während eines, insbesondere spontan einsetzenden, Aufschäumvorgangs expandiert das Schaummaterial 4. Insbesondere erfolgt eine Höhenausdehnung der Schaumlage von der Ausgangshöhe h₀ auf eine erste Höhe h₁. Eine weitere Höhenausdehnung über die erste Höhe h₁ hinaus ist durch die erste Höhenbegrenzung 6 mechanisch verhindert. Die erste Höhenbegrenzung 6 stellt eine mechanische Barriere für die Schaumlage dar. An dem Kontaktmaterial 8 ist als Benetzungsmittel für die Schaumlage Wasser vorgesehen. Durch die Benetzung mit dem Wasser wird das weitere Aufschäumen der Schaumlage begünstigt und insbesondere gezielt beeinflusst.

Nach einer definierten Reaktionsdauer wird die erste Höhenbegrenzung 6 entfernt und durch die zweite Höhenbegrenzung 7 ersetzt. Die zweite Höhenbegrenzung 7 wird mit dem Obermaterial 2 an der Kontaktfläche **11** der Schaumlage angeordnet.

Durch weiteres Reagieren der Schaumlage wird das Obermaterial 2 mit der Schaumlage zu einem Verbundmaterial verbunden, insbesondere an der Kontaktfläche **11** der Schaumlage 4 verklebt. Das Verkleben der Schaumlage 4 mit dem Obermaterial 2 findet insbesondere unter Druckausübung, also durch Andrücken der zweiten Höhenbegrenzung 7 an das Obermaterial 2, statt. Anschließend wird die zweite Höhenbegrenzung 7 entfernt. Das Verbundmaterial, bestehend aus dem Obermaterial 2 und dem damit verbundenen Schaummaterial 4 kann von der Unterlage 3 entnommen werden. Das Verbundmaterial 2, 4 weist eine zweite Höhe h₂ auf. Die Schaumlage 4 in dem Verbundmaterial weist eine Höhe auf, die kleiner oder gleich der ersten Höhe h₁ ist, die die Schaumlage 4 nach Beendigung der Reaktionsdauer an der ersten Höhenbegrenzung 6 aufweist.

Die Vorrichtung 1 ermöglicht eine insbesondere unkomplizierte und flexible Herstellung von Verbundbauteilen. Insbesondere ermöglicht die Vorrichtung 1 einen unkomplizierten manuellen Betrieb.

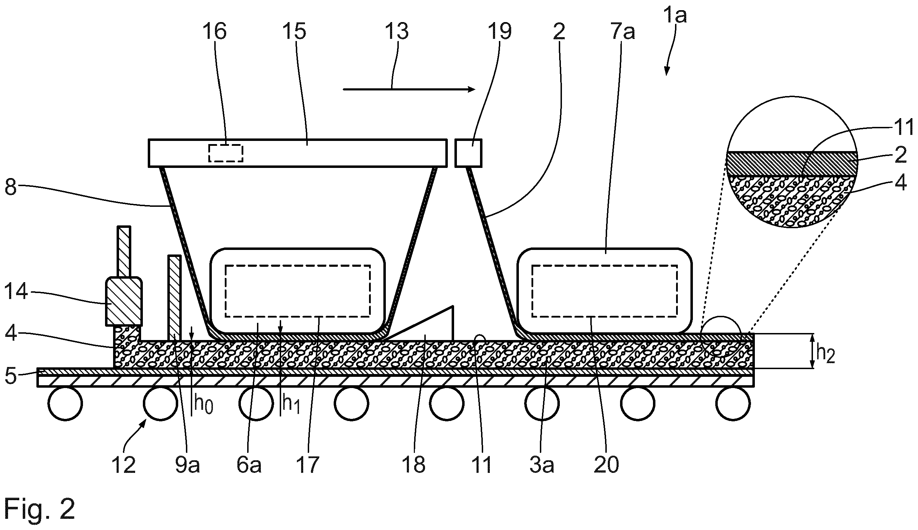

Im Folgenden wird unter Bezugnahme auf Fig. 2 eine zweite Ausführungsform beschrieben. Konstruktiv identische Teile erhalten dieselben Bezugszeichen wie bei der ersten Ausführungsform, auf deren Beschreibung hiermit verwiesen wird. Konstruktiv unterschiedliche, jedoch funktionell gleichartige Teile erhalten dieselben Bezugszeichen mit einem nachgestellten a.

Wesentlicher Unterschied gegenüber der vorherigen Ausführungsform besteht darin, dass die Vorrichtung 1a ein kontinuierliches Herstellverfahren ermöglicht.

Dazu ist die Unterlage 3a mit einer Fördervorrichtung 12 ausgestattet, die eine, insbesondere kontinuierliche Förderung des Schaummaterials 4 entlang einer Materialförderrichtung 13 ermöglicht. Gemäß dem gezeigten Ausführungsbeispiel ist die Fördervorrichtung als Rollenförderer ausgeführt. Es sind auch andere Fördervorrichtungen möglich. Gemäß Fig. 2 ist die Materialförderrichtung 13 von links nach rechts orientiert. Auf der Unterlage 3a ist das Trägermaterial 5 angeordnet.

Die Vorrichtung 1a weist eine Schaummaterialzuführeinrichtung 14 auf, mittels der das, insbesondere flüssige, Schaummaterial 4 auf das Trägermaterial 5 an der Unterlage 3a aufgebracht werden kann. Bezüglich der Materialförderrichtung 13 stromabwärts ist das Abzugselement 9a angeordnet. Bei der Vorrichtung 1a ist das Abzugselement 9a ausschließlich höhenverlagerbar angeordnet. Eine Relativverlagerung des Abzugselements 9a bezüglich des Schaummaterials 4 erfolgt durch die Förderung des Schaummaterials 4 entlang der Materialförderrichtung 13.

Bezüglich der Materialförderrichtung 13 ist stromabwärts des Abzugselements 9a die erste Höhenbegrenzung 6a angeordnet. Die erste Höhenbegrenzung 6a ist statisch bezüglich der Fördervorrichtung 12 angeordnet und mit einem Höhenabstand, der der ersten Höhe h₁ entspricht, beabstandet bezüglich des Schaummaterials 4 angeordnet.

Mit der ersten Höhenbegrenzung 6a ist eine Kontaktmaterial-Zuführeinrichtung 15 gekoppelt, die in Fig. 2 rein schematisch dargestellt ist. Die Kontaktmaterial-Zuführeinrichtung 15 dient zum, insbesondere kontinuierlichen, Zuführen des Kontaktmaterials, insbesondere in Form der Kontaktfolie 8, an der ersten Höhenbegrenzung. Insbesondere kann die Kontaktmaterial-Zuführeinrichtung 15 eine Benetzungseinheit 16 aufweisen, die das Benetzen des Trägermaterials mit dem Benetzungsmittel, insbesondere Wasser, gewährleistet. Insbesondere ist es denkbar, dass das Kontaktmaterial 8 die Benetzungseinheit 16 in der Kontaktmaterial-Zuführeinrichtung 15 kontinuierlich durchläuft und dadurch, insbesondere automatisch, mit dem Benetzungsmittel benetzt wird. Zusätzlicher Aufwand für das Benetzen des Kontaktmaterials 8 ist dadurch vermieden. Insbesondere ist es denkbar, dass das Kontaktmaterial 8 umlaufend über die Kontaktmaterial-Zuführeinrichtung bereitgestellt wird, also entlang einer geschlossenen Endlosbahn. Dazu wird das Kontaktmaterial 8 stromabwärts der ersten Höhenbegrenzung 6a wieder zu der Kontaktmaterial-Zuführeinrichtung 15 zurückgeführt.

Die erste Höhenbegrenzung 6a weist gemäß dem gezeigten Ausführungsbeispiel eine erste Temperiereinheit 17 auf, mittels der es möglich ist, ein gezielt einstellbares Temperaturprofil auf das Schaummaterial 4 abzugeben. Die erste Temperiereinheit 17 kann auch entfallen.

Stromabwärts bezogen auf die Materialförderrichtung 13 ist bezüglich der ersten Höhenbegrenzung 6a eine Trenneinheit 18 angeordnet. Die Trenneinheit 18 vereinfacht das Trennen des Kontaktmaterials 8 von der aufgeschäumten Schaumlage 4. Das Rückführen des Kontaktmaterial 8 ist dadurch vereinfacht. Insbesondere ist durch die Trenneinheit 18 gewährleistet, dass das Schaummaterial 4, das entlang der Materialförderrichtung 13 in der Vorrichtung 1a weitergefördert wird, keine Rückstände des Kontaktmaterials 8 aufweist. Die Trenneinheit 18 gewährleistet eine zuverlässige Trennung des Kontaktmaterials 8 von dem Schaummaterial 4.

Es wurde erkannt, dass das Kontaktmaterial 8 ausschließlich im Bereich der ersten Höhenbegrenzung 6a erforderlich ist. Die Trenneinheit 18 kann auch entfallen. Stromabwärts bezogen auf die Materialförderrichtung 13 bezüglich der ersten Höhenbegrenzung 6a ist die zweite Höhenbegrenzung 7a angeordnet. Der zweiten Höhenbegrenzung 7a wird das Obermaterial 2 mittels einer nicht näher dargestellten Obermaterialzuführeinrichtung 19 zugeführt. Insbesondere wird von der Obermaterialzuführeinrichtung 19 das Obermaterial 2 als Endlosmaterial, insbesondere als Rollenmaterial zur Verfügung gestellt. Die Durchführung des Verfahrens als kontinuierliches Verfahren ist dadurch erleichtert. Das Obermaterial wird mit der Kontaktfläche 11 des Schaummaterials 4 im Bereich der zweiten Höhenbegrenzung 7a verbunden. Stromabwärts der zweiten Höhenbegrenzung 7a wird das so hergestellte Verbundmaterial, das aus dem Obermaterial 2 und dem damit verbundenen, geschäumten Schaummaterial 4 besteht, abtransportiert. Das Verbundmaterial kann an eine nicht näher dargestellte Verbundmaterialaufnahmeeinrichtung, insbesondere als Rollenmaterial abgegeben werden.

An der zweiten Höhenbegrenzung 7a kann eine zweite Temperiereinheit 20 angeordnet und insbesondere in die zweite Höhenbegrenzung 7a integriert sein. Die zweite Temperiereinheit 20 kann im Wesentlichen identisch zu der ersten Temperiereinheit 17 ausgeführt sein.

Im Folgenden wird anhand von Fig. 2 ein kontinuierliches Verfahren zum Hinterschäumen des Obermaterials 2 näher erläutert. Mittels der Schaummaterialzuführeinrichtung 14 wird das flüssige Schaummaterial auf das Trägermaterial 5 aufgegeben. Das Schaummaterial 4 wird mit dem Trägermaterial 5 auf der Unterlage 3a mittels der Fördervorrichtung 12 entlang der Materialförderrichtung 13 kontinuierlich gefördert. Mittels des Abzugselements 9a wird die Ausgangshöhe h₀ definiert eingestellt.

Im Bereich der ersten Höhenbegrenzung 6a wird Trägermaterial 8, das mit einem Benetzungsmittel benetzt ist, zugeführt. Dadurch ist gewährleistet, dass das Schaummaterial 4 mit dem Benetzungsmittel benetzt wird. Gleichzeitig gewährleistet die erste Höhenbegrenzung 6a eine definierte Höhenausdehnung beim Aufschäumen des Schaummaterials. Die Höhenausdehnung ist auf die erste Höhe h₁ begrenzt. Stromabwärts der ersten Höhenbegrenzung 6a dient die Trenneinheit 18 dazu, dass das Kontaktmaterial 8 von dem zumindest teilweise aufgeschäumten Schaummaterial 4 zuverlässig getrennt wird. Das getrennte Kontaktmaterial 8 wird der Kontaktmaterial-Zuführeinrichtung 15 rückgeführt.

Das zumindest teilweise geschäumte Schaummaterial 4 wird der zweiten Höhenbegrenzung 7a zugeführt und dort an der Kontaktfläche 11 mit dem Obermaterial 2 kontaktiert und insbesondere mit dem Obermaterial 2 verbunden. Insbesondere ist die mittels der zweiten Höhenbegrenzung 7a definierte zweite Höhe h₂ für das Verbundmaterial derart festgelegt, dass das Obermaterial 2 an das Schaummaterial 4 angedrückt und damit verbunden wird. Insbesondere ist die zweite Höhe h₂ kleiner als die Summe der Materialdicke des Obermaterials 2 und der ersten Höhe h₁ des Schaummaterials 4 an der ersten Höhenbegrenzung 6a.

Sofern das Verbundmaterial zusätzlich zu dem Obermaterial 2 und dem Schaummaterial 4 noch ein Untermaterial aufweisen soll, könnte dies mit dem Schaummaterial verbunden werden, nachdem das Trägermaterial 5 von dem Schaummaterial 4 abgenommen worden ist. Dadurch kann ein dreilagiges Verbundmaterial, ein sogenanntes Trilaminat, hergestellt werden. Die Befestigung des Untermaterials an dem Schaummaterial kann in einem kombinierten Verfahrensschritt mit dem Befestigen des Obermaterials 2 an dem Schaummaterial 4, in einem vorgelagerten oder in einem nachgelagerten Prozessschritt erfolgen.

Zur gezielten Einstellung des Aufschäumens im Bereich der ersten Höhenbegrenzung 6a und/oder zum Verbinden mit dem Obermaterial 2 im Bereich der zweiten Höhenbegrenzung 7a dienen die Temperiereinheiten 17, 20.

## Patentansprüche

1. Verfahren zum Hinterschäumen eines Obermaterials umfassend die Verfahrensschritte
- Bereitstellen eines reaktiven Schaummaterials (4) in Form einer Flüssigkeit als Schaumlage mit einer Ausgangshöhe (h₀),
- zumindest teilweises Aufschäumen des Schaummaterials (4),
- Begrenzen einer Höhenausdehnung der Schaumlage beim teilweisen Aufschäumen bis zu einer ersten Höhe (h₁), wobei gilt h₁ > h₀,
- Benetzen und Imprägnieren einer oberen Kontaktfläche (11) der Schaumlage (4) mit einem Reaktionshilfsmittel,
- Anordnen des Obermaterials (2) an der Kontaktfläche (11) der Schaumlage, **dadurch gekennzeichnet, dass** das Verfahren weiterhin den folgenden Verfahrensschritt umfasst:
- Verbinden der zumindest teilweise aufgeschäumten Schaumlage an der Kontaktfläche (11) mit dem Obermaterial (2) zu einem Verbundmaterial mittels einer zweiten Höhenbegrenzung (7; 7a).

2. Verfahren gemäß Anspruch 1, **gekennzeichnet durch** eine Reaktionsdauer von mindestens 2 min, insbesondere mindestens 3 min, insbesondere mindestens 5 min und insbesondere höchstens 12 min, wobei sich die Reaktionsdauer auf das Benetzen und Imprägnieren der oberen Kontaktfläche (11) der Schaumlage (4) mit dem Reaktionshilfsmittel bezieht.

3. Verfahren gemäß einem der vorstehenden Ansprüche, **dadurch gekennzeichnet, dass** an einer ersten Höhenbegrenzung (6; 6a) ein Kontaktmaterial (8), insbesondere eine Kontaktfolie, angeordnet ist.

4. Verfahren gemäß Anspruch 3, **gekennzeichnet durch** ein Trennen der Schaumlage (4) von dem Kontaktmaterial (8), insbesondere bevor das Obermaterial (2) an der Schaumlage angeordnet wird.

5. Verfahren gemäß einem der vorstehenden Ansprüche, **dadurch gekennzeichnet, dass** eine durch die zweite Höhenbegrenzung (7; 7a) definierte zweite Höhe (h₂) zwischen 0,5 mm und 10,0 mm beträgt.

6. Verfahren gemäß einem der vorstehenden Ansprüche, **dadurch gekennzeichnet, dass** das Verbinden der Schaumlage (4) mit dem Obermaterial (2) durch Verkleben erfolgt, insbesondere durch Anhaften der imprägnierten Schaumlage (4) an dem Obermaterial (2), wobei insbesondere ein separates Klebematerial entbehrlich ist.

7. Verfahren gemäß einem der vorstehenden Ansprüche, **gekennzeichnet durch** ein Temperieren, insbesondere einer ersten Höhenbegrenzung (6; 6a) während des Aufschäumens und/oder der zweiten Höhenbegrenzung (7; 7a) während des Verbindens mit dem Obermaterial (2).

8. Verfahren gemäß einem der vorstehenden Ansprüche, **dadurch gekennzeichnet, dass** das Verfahren kontinuierlich durchgeführt wird.

9. Verfahren gemäß einem der vorstehenden Ansprüche, **dadurch gekennzeichnet, dass** das Schaummaterial (4) auf ein Trägermaterial (5), insbesondere auf eine Trägerfolie, aufgebracht wird.

10. Verfahren gemäß Anspruch 8 oder 9, **dadurch gekennzeichnet, dass** das Schaummaterial (4), insbesondere mittels des Trägermaterials (5), kontinuierlich entlang einer Materialförderrichtung (13), insbesondere relativ zu der ersten Höhenbegrenzung (6a) und/oder relativ zu der zweiten Höhenbegrenzung (7a) verlagert wird.

## Claims

1. Method for foaming in-situ of a top material comprising the method steps of
- providing a reactive foam material (4) in the form of a liquid as foam layer with an initial height (h₀), -
- at least partially foaming the foam material (4),
- limiting a height expansion of the foam layer during partial foaming up to a first height (h₁), wherein h₁ > h₀,
- wetting and impregnating an upper contact surface (11) of the foam layer (4) with a reaction aid,
- arranging the top material (2) on the contact surface of the foam layer,
**characterised in that**
the method further comprises the following method step:
- bonding the at least partially foamed foam layer on the contact surface (11) with the top material (2) to form a composite material by means of a second height limit (7; 7a).

2. Method according to claim 1, **characterised by** a reaction time of at least 2 mins, in particular at least 3 mins, in particular at least 5 mins and in particular no more than 12 mins, wherein the reaction time relates to the wetting and impregnation of the upper contact surface (11) of the foam layer (4) with the reaction aid.

3. Method according to one of the preceding claims, **characterised in that** a contact material (8), in particular a contact foil, is arranged at a first height limit (6; 6a).

4. Method according to claim 3, **characterised by** separating the foam layer (4) from the contact material (8), in particular before the top material (2) is arranged on the foam layer.

5. Method according to one of the preceding claims, **characterised in that** a second height (h₂) defined by the second height limit (7; 7a) is between 0.5 mm and 10.0 mm.

6. Method according to one of the preceding claims, **characterised in that** the foam layer (4) is bonded with the top material (2) by adhesion, in particular adhesion of the impregnated foam layer (4) to the top material (4), wherein in particular a separate adhesive material is dispensable.

7. Method according to one of the preceding claims, **characterised by** tempering, in particular a first height limit (6; 6a) during foaming and/or the second height limit (7; 7a) during bonding with the top material (2).

8. Method according to one of the preceding claims, **characterized in that** the method is carried out continuously.

9. Method according to one of the preceding claims, **characterised in that** the foam material (4) is applied to a support material (5), in particular a support foil.

10. Method according to claim 8 or 9, **characterised in that** the foam material (4) is moved, in particular by means of the support material (5), continually along a material conveying direction (13), in particular relative to the first height limit (6a) and/or relative to the second height limit (7a).

## Revendications

1. Procédé de moussage in situ d'un matériau supérieur comprenant les étapes de procédé consistant à
- mettre à disposition un matériau de mousse (4) réactif sous la forme d'un liquide en tant que couche de mousse ayant une hauteur initiale (h₀),
- faire mousser au moins en partie le matériau de mousse (4),
- limiter une expansion en hauteur de la couche de mousse lors du moussage partiel jusqu'à une première hauteur (h₁), où h₁ > h₀,
- mouiller et imprégner une surface de contact (11) supérieure de la couche de mousse (4) avec un agent auxiliaire de réaction,
- agencer le matériau supérieur (2) sur la surface de contact (11) de la couche de mousse,
**caractérisé en ce que**
le procédé comprend en outre l'étape de procédé suivante consistant à :
- relier la couche de mousse au moins en partie moussée, au niveau de la surface de contact (11), au matériau supérieur (2) pour former un matériau composite au moyen d'une seconde limite de hauteur (7 ; 7a).

2. Procédé selon la revendication 1, **caractérisé par** une durée de réaction d'au moins 2 min, en particulier au moins 3 min, en particulier au moins 5 min et en particulier 12 min au maximum, la durée de réaction se rapportant au mouillage et à l'imprégnation de la surface de contact (11) supérieure de la couche de mousse (4) avec l'agent auxiliaire de réaction.

3. Procédé selon l'une des revendications précédentes, **caractérisé en ce qu'**un matériau de contact (8), en particulier une feuille de contact, est agencé sur une première limite de hauteur (6 ; 6a).

4. Procédé selon la revendication 3, **caractérisé par** une séparation de la couche de mousse (4) d'avec le matériau de contact (8), en particulier avant que le matériau supérieur (2) soit agencé sur la couche de mousse.

5. Procédé selon l'une des revendications précédentes, **caractérisé en ce qu'**une seconde hauteur (h2) définie par la seconde limite de hauteur (7 ; 7a) est comprise entre 0,5 mm et 10,0 mm.

6. Procédé selon l'une des revendications précédentes, **caractérisé en ce que** la liaison de la couche de mousse (4) avec le matériau supérieur (2) est effectuée par collage, en particulier par adhésion de la couche de mousse (4) imprégnée sur le matériau supérieur (2), un matériau adhésif séparé étant en particulier superflu.

7. Procédé selon l'une des revendications précédentes, **caractérisé par** une régulation thermique, en particulier d'une première limite de hauteur (6 ; 6a) pendant le moussage et/ou de la seconde limite de hauteur (7 ; 7a) pendant la liaison avec le matériau supérieur (2).

8. Procédé selon l'une des revendications précédentes, **caractérisé en ce que** le procédé est effectué en continu.

9. Procédé selon l'une des revendications précédentes, **caractérisé en ce que** le matériau de mousse (4) est appliqué sur un matériau de support (5), en particulier une feuille de support.

10. Procédé selon la revendication 8 ou 9, **caractérisé en ce que** le matériau de mousse (4), est déplacé, en particulier au moyen du matériau de support (5), en continu le long d'une direction de transport de matériau (13), en particulier par rapport à la première limite de hauteur (6a) et/ou par rapport à la seconde limite de hauteur (7a).
